# EUROPÄISCHE PATENTSCHRIFT

(11) **EP 2 797 779 B1**
(45) Veröffentlichungstag und Bekanntmachung des Hinweises auf die Patenterteilung: **09.12.2015**
(21) Anmeldenummer: 12810219.1
(22) Anmeldetag: 18.12.2012
(51) Int. Cl.: B60R 22/34, B60R 22/38, B60R 22/41

(54) **SELBSTSPERRENDER GURTAUFROLLER MIT EINER IN AUFWICKELRICHTUNG DER GURTWELLE WIRKSAMEN ABSCHALTUNG SEINES GURTBANDSENSITIVEN STEUERSYSTEMS**
SELF-LOCKING BELT RETRACTOR WITH SWITCH-OFF ACTION ON ITS BELT-STRAP-SENSITIVE CONTROL SYSTEM THAT IS EFFECTIVE IN THE WINDING DIRECTION OF THE BELT SHAFT
ENROULEUR AUTOBLOQUANT DOTÉ D'UN DISPOSITIF PERMETTANT LA DÉCONNEXION DE SON SYSTÈME DE COMMANDE SENSIBLE À LA SANGLE EN AGISSANT SUR L'ARBRE D'ENTRAÎNEMENT

(30) Priorität: 27.12.2011 DE 102011057066
(43) Veröffentlichungstag der Anmeldung: 05.11.2014
(73) Patentinhaber: Autoliv Development AB, 447 83 Vårgårda (SE)
(72) Erfinder: HEINE, Volkmar, 22589 Hamburg (DE)
(74) Vertreter: Müller, Karl-Ernst
(86) Internationale Anmeldenummer: PCT/EP2012/075958
(87) Internationale Veröffentlichungsnummer: WO 2013/098124

(56) Entgegenhaltungen:
- EP-A1- 1 860 002
- DE-A1-102008 053 853
- GB-A- 2 269 308
- GB-A- 2 294 384
- US-A1- 2009 218 432

## Beschreibung

Die Erfindung betrifft einen selbstsperrenden Gurtaufroller für Sicherheitsgurte mit einer drehbar in einem Gehäuserahmen gelagerten und in Aufwickelrichtung des Gurtbandes von einer Aufwickelfeder vorgespannten Gurtwelle und mit einem gurtbandsensitiven Ansteuermechanismus, der eine an die Gurtwelle gekoppelte Steuerscheibe zur Aussteuerung eines an der Gurtwelle angeordneten und bei Relativdrehung zwischen Gurtwelle und Steuerscheibe bis zum Eingriff in eine Gehäuseverzahnung gegen Federwirkung auslenkbaren Sperrgliedes aufweist, wobei die Steuerscheibe eine exzentrisch an der Steuerscheibe schwenkbar gelagerte und gegen die Wirkung einer Rückstellfeder radial ausschwenkbare, zweiarmige Trägheitsmasse trägt, die im Auslösefall aufgrund der auf die Steuerscheibe einwirkenden Drehbeschleunigung mit ihrem einen Blockierarm radial bis zum Eingriff in eine ortsfeste Verzahnung ausschwenkt und dadurch die Steuerscheibe in deren Drehbewegung anhält und festlegt, und wobei an einer Lagerstelle für die Gurtwelle und/oder die Steuerscheibe eine zwei in Umfangsrichtung voneinander beabstandet angeordnete Federschenkel aufweisende Drehfeder mittels einer reibschlüssigen Lagerung relativ zur Steuerscheibe zwischen einer Anlagestellung an der Trägheitsmasse und einer Anlagestellung an einem von der Ebene der Steuerscheibe aufstehenden Mitnehmer drehbar gelagert ist.

Ein Gurtaufroller mit den vorgenannten Merkmalen ist in der EP 1 860 002 Al beschrieben. Bei einem derartigen, mit einem gurtbandsensitiven Ansteuermechanismus versehenen Gurtaufroller kann beispielsweise das Problem auftreten, dass nach einem Ablegen des Sicherheitsgurtes die Aufwickelfeder der Gurtwelle mit einer derartigen Drehgeschwindigkeit in Aufwickelrichtung dreht, dass aufgrund des am Ende des Gurtbandeinzuges wirksamen Stopps der Drehbewegung die Gurtwelle trägheitsbedingt in Abwickelrichtung zurückfedert und durch die dadurch verursachte Drehung der Gurtwelle in Gurtauszugsrichtung auch mit einer relativ geringen Drehbeschleunigung das gurtbandsensitive Steuerungssystem aktiviert, d.h. die Trägheitsmasse in deren Eingriffsstellung mit der ortsfesten Verzahnung ausgelenkt wird. Gleiches kann geschehen, wenn der Gurtbandeinzug durch eine plötzliche Abbremsung des Fahrzeuges unterbrochen wird. Dieses Verhalten des Gurtaufrollers kann dazu führen, dass der Gurtaufroller zum weiteren Gebrauch zunächst einmal durch Zug am Gurtband entriegelt werde muss, um das Steuersystem zu entriegeln und anschließend den Gurt frei ausziehen zu können.

Bei dem in der gattungsbildenden EP 1 860 002 A1 beschriebenen Gurtaufroller ist zur Beseitigung dieses Problems die Anordnung einer auf einer Lagerstelle für die Gurtwelle und/oder die Steuerscheibe reibschlüssig und damit relativ zur Steuerscheibe angeordneten Drehfeder vorgeschlagen, die eine Ω-Form mit einem zentralen, mit Radius versehenen Lagerbereich und mit seitlich davon gegenüberliegend abstehend und im Winkel von 180 Grad zueinander gestreckt angeordneten Federschenkeln aufweist. Der eine Federschenkel wirkt dabei mit einem Ende der Trägheitsmasse zusammen, während der andere Federschenkel in Anlage an einem aus der Ebene der Steuerscheibe aufstehenden Mitnehmer ist. Die mit den unterschiedlichen Funktionszuständen des Gurtaufrollers einhergehende reibschlüssige Verdrehung der Drehfeder auf ihrer Lagerstelle wird einerseits durch das der Drehfeder eigene und auf sie einwirkende Trägheitsmoment bewirkt und andererseits durch das Zusammenwirken mit der trägheitsgesteuerten Bewegung der Trägheitsmasse. Dies kann in nachteiliger Weise zu Steuerungsproblemen bei dem Zusammenwirken der Drehfeder mit der Trägheitsmasse führen.

Der Erfindung liegt daher die Aufgabe zugrunde, einen selbstsperrenden Gurtaufroller mit den gattungsgemäßen Merkmalen derart weiterzubilden, dass dessen Funktionsablauf verbessert ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass die beiden Federschenkel der Drehfeder den Mitnehmer zwischen sich einfassen und der Mitnehmer Anschlagflächen für die Federschenkel zur Mitnahme der Drehfeder bei der Drehung der Steuerscheibe sowohl in Gurtaufwickelrichtung als auch in Gurtauszugsrichtung ausbildet, wobei der eine der beiden Federschenkel bei Drehung der Steuerscheibe in Gurtaufwickelrichtung in den von einem dem Blockierarm gegenüberliegenden Schwenkarm der Trägheitsmasse im Auslösefall durchschrittenen Schwenkweg hineinragt und in dieser Blockierstellung der Drehfeder ein Ausschwenken der Trägheitsmasse verhindert und bei Drehung der Steuerscheibe in Gurtauszugsrichtung aufgrund einer Relativdrehung der Drehfeder zur Steuerscheibe in eine Freigabestellung der Drehfeder die Trägheitsmasse freigibt.

Somit beruht die Erfindung auf dem Grundprinzip, die Trägheitsmasse unabhängig von dem auf sie einwirkenden Trägheitsmoment mittels der vorgesehenen Drehfeder an einem Ausschwenken zu hindern. Da insbesondere während des Gurtbandauszuges ein Ansprechen der Trägheitsmasse mit deren Ausschwenken ungehindert möglich sein muss, ist durch die besondere Ausbildung und Anordnung der Drehfeder im Zusammenhang mit dem Mitnehmer dafür Sorge getragen, dass sich bei einem beginnenden Gurtbandauszug die gemeinsam mit der Gurtwelle drehende Steuerscheibe zunächst um einen gewissen Drehwinkel relativ zu der aufgrund von deren reibschlüssiger Lagerung stehen bleibenden Drehfeder verdreht, bis der zur Festlegung der Trägheitsmasse vorgesehene Federschenkel außerhalb des Schwenkweges der Trägheitsmasse liegt, sodass die Trägheitsmasse bei entsprechenden Drehbewegungen der Steuerscheibe frei ausschwenken kann. In dieser Freigabeposition der Drehfeder gelangt der Federschenkel in Anlage an der zugeordneten Anschlagfläche des Mitnehmers und wird in dieser Position bei der weiteren Drehung der Steuerscheibe mitgenommen, sodass die Drehfeder die eingenommene Freigabeposition auf der Steuerscheibe beibehält. Bei einer anschließenden Drehung der Gurtwelle mit Steuerscheibe in Gurtaufwickelrichtung kommt es wiederum zu einer Relativdrehung der Steuerscheibe zu der zunächst wiederum aufgrund von deren reibschlüssiger Lagerung stehen bleibenden Drehfeder, sodass sich die Trägheitsmasse bei der Drehung der Steuerscheibe mit ihrem Schwenkarm außen über das Ende des betreffenden Federschenkels schiebt, sodass der Federschenkel seine Funktion des Festlegens der Trägheitsmasse am Ende der Aufwickelbewegung übernehmen kann. In dieser wieder eingenommenen Blockierstellung der Drehfeder stößt der Mitnehmer mit einer anderen Anschlagfläche gegen den anderen Federschenkel der Drehfeder, sodass die Drehfeder in ihrer Blockierstellung jeweils bei der Drehung der Steuerscheibe mitgenommen wird und dabei ihre Blockierstellung beibehält.

Nach einem Ausführungsbeispiel der Erfindung ist vorgesehen, dass an dem Schwenkarm der Trägheitsmasse eine Anlagefläche für den zur Festlegung der Trägheitsmasse vorgesehenen Federschenkel ausgebildet ist.

Damit die Blockierstellung der Drehfeder nicht nur in einer exakten Position des betreffenden Federschenkels zur Trägheitsmasse wirksam ist, ist gemäß einem Ausführungsbeispiel der Erfindung vorgesehen, dass der zur Festlegung der Trägheitsmasse vorgesehene Federschenkel über einen vorgegebenen, von der Trägheitsmasse aufgrund der Relativdrehung der die Trägheitsmasse tragenden Steuerscheibe gegenüber der feststehenden Drehfeder durchschrittenen Drehwinkel in den Schwenkweg hineinragt und die an der Trägheitsmasse ausgebildete Anlagefläche eine in Umfangsrichtung dem für das Festlegen der Trägheitsmasse eingerichteten Drehwinkel der Steuerscheibe entsprechende Erstreckung aufweist. Da es bei dem Anmeldungsgegenstand nur um den plötzlichen Stopp der Drehbewegung der Gurtwelle am Ende von deren Aufwickelbewegung und somit um eine im Rahmen der durch die Auslegung der Kopplung von Gurtwelle und Steuerscheibe aneinander möglichen trägheitsbedingten Weiterdrehung der Steuerscheibe gegenüber der Gurtwelle geht, braucht der entsprechende Drehwinkel zur Festlegung der Trägheitsmasse gegen Auslenkung durch den Federschenkel auch nur dieser konstruktiv festliegenden Weiterdrehung der Steuerscheibe entsprechen.

Nach einem Ausführungsbeispiel der Erfindung ist vorgesehen, dass die Drehfeder mit beiden Federschenkeln in einer oberhalb der Trägheitsmasse und mit Abstand zur Ebene der Steuerscheibe gelegenen Ebene angeordnet ist und die freien Enden der beiden Federschenkel jeweils einen in Richtung der Ebene der Steuerscheibe umgebogenen Abschnitt aufweisen und die umgebogenen Abschnitte den Mitnehmer übergreifen und mit dessen Anschlagflächen zusammenwirken. Einerseits wird durch die Anordnung der Drehfeder in einer mit Abstand zur Ebene der Steuerscheibe angeordneten Ebene sichergestellt, dass die Drehung der Drehfeder zwischen ihrer Blockierstellung und ihrer Freigabestellung relativ zur Steuerscheibe ohne eine Behinderung möglich ist, und andererseits wird über den jeweils umgebogenen Abschnitt der beiden Federschenkel eine jeweils flächige Anlage an der Trägheitsmasse einerseits und an den Anschlagflächen des Mitnehmers andererseits sichergestellt.

Für die Ausführung der Blockierfunktion der Drehfeder ist es ausreichend, wenn gemäß einem Ausführungsbeispiel der Erfindung der umgebogene Abschnitt des zur Festlegung der Trägheitsmasse vorgesehenen Federschenkels bei in der Ruhelage befindlicher Trägheitsmasse einen Abstand zu der Anlagefläche der Trägheitsmasse einhält.

Alternativ kann vorgesehen sein, dass der umgebogene Abschnitt des zur Festlegung der Trägheitsmasse vorgesehenen Federschenkels bei in der Ruhelage befindlicher Trägheitsmasse an der Anlagefläche der Trägheitsmasse anliegt. Hiermit ist der zusätzliche Vorteil verbunden, dass der zugeordnete Federschenkel der Drehfeder in deren Blockierstellung gleichzeitig auch durch ein Festlegen der Trägheitsmasse Klappergeräusche verhindert.

Nach einem ersten Ausführungsbeispiel der Erfindung kann vorgesehen sein, dass die Drehfeder als Drahtbiegeteil ausgebildet ist.

In einer alternativen Ausführungsform der Erfindung kann vorgesehen sein, dass die Drehfeder als aus einem entsprechenden Blech hergestelltes Stanz-Biegeteil ausgebildet ist. Hierdurch weist die flach ausgeführte Drehfeder im Vergleich mit einem Drahtbiegeteil eine reduzierte Stärke bei gleicher Festigkeit auf und ist grundsätzlich auch formgenauer herzustellen als ein Drahtbiegeteil.

Bei einem derartigen Ausführungsbeispiel kann vorgesehen sein, dass das Ende des umgebogenen Abschnitts des zur Festlegung der Trägheitsmasse vorgesehenen Federschenkels T-förmig mit seitlich von der Achse des Federschenkels abstehenden Ansätzen ausgebildet ist. Hierdurch wird eine entsprechend gute Anlage und Führung an der Trägheitsmasse einerseits und dem Mitnehmer andererseits verwirklicht.

Hierbei kann vorgesehen sein, dass der Lagerbereich der als Stanz-Biegeteil ausgebildeten Drehfeder mit einer Kunststoffschicht versehen ist, wobei die aus Kunststoff und Metall bestehende Drehfeder eine einstückige Ausführung aufweisen kann. Optional kann dabei der Lagerbereich der Drehfeder auch als geschlossener Ring ausgebildet sein.

In der Zeichnung sind Ausführungsbeispiele der Erfindung wiedergegeben, welche nachstehend beschrieben sind. Es zeigen:
- Fig. 1: die Steuerscheibe mit daran schwenkbar angeordneter Trägheitsmasse in einer schematisierten Darstellung einschließlich der Zuordnung der an einer nicht dargestellten Lagerplatte gehalterten und mit der Trägheitsmasse zusammenwirkenden Drehfeder in der für die Gurtaufwickelrichtung geltenden Stellung der Drehfeder,
- Fig. 2: den Gegenstand der Figur 1 in der für die Gurtauszugsrichtung der Gurtwelle geltenden Stellung der Drehfeder,
- Fig. 3: die Steuerscheibe gemäß Figur 1 mit einer als Stanz-Biegeteil ausgebildeten Drehfeder in der für Figur 1 geltenden Stellung der Drehfeder,
- Fig. 3a: die als Stanz-Biegeteil ausgebildete Drehfeder in einer Einzeldarstellung,
- Fig. 4: den Gegenstand der Figur 3 in der für Figur 2 geltenden Stellung der Drehfeder.

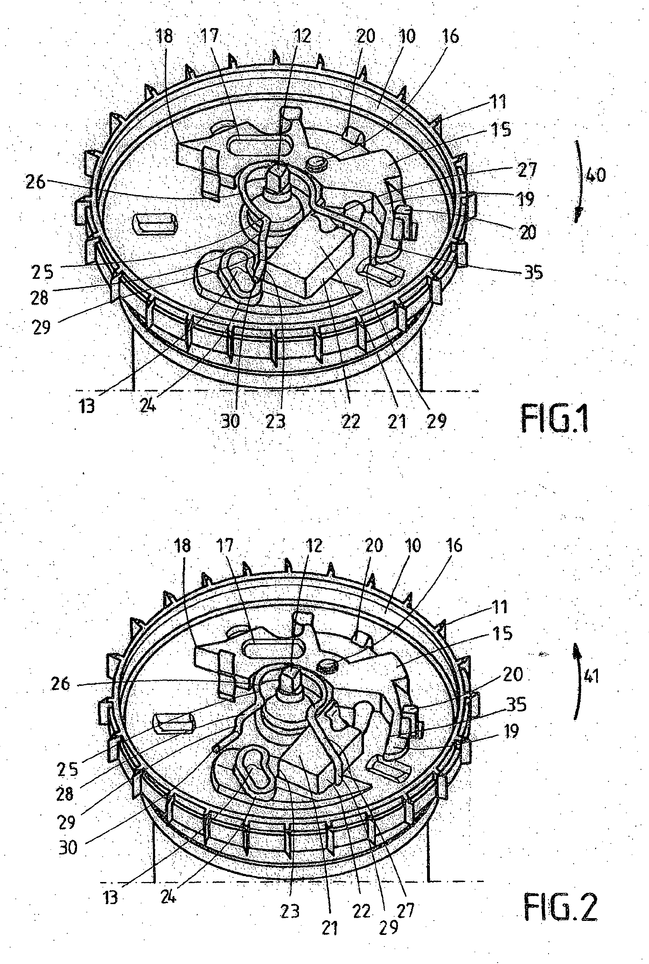

Die aus Figur 1 ersichtliche Steuerscheibe 10 ist auf einem Wellenfortsatz 12 drehbar gelagert und weist eine Außenverzahnung 11 zum Zusammenwirken mit einem fahrzeugsensitiven Steuersystem auf. In der Steuerscheibe 10 ist ein Langloch 13 ausgebildet, in welchem ein lediglich in den Figuren 5 bis 7 dargestellter und an einem in Blickrichtung unter der Steuerscheibe 10 an der nicht weiter dargestellten Gurtwelle ausschwenkbar gelagerten Sperrglied angeordneter Zapfen 14 geführt ist. An der Steuerscheibe 10 ist weiterhin eine zweiarmige Trägheitsmasse 15 mittels einer in deren zentralen Bereich ausgebildeten Drehlagerung 16 schwenkbar gelagert, wobei die zweiarmige Trägheitsmasse einen Blockierarm 17 mit einer äußeren Blockierspitze 18 und einen Schwenkarm 19 aufweist. Die Trägheitsmasse 15 ist von an der Steuerscheibe 10 angebrachten und entsprechend gewinkelten Haltearmen 20 an der Steuerscheibe 10 gehalten, so dass die Trägheitsmasse 15 insbesondere bei ihrer gemeinsamen Drehung mit der Steuerscheibe 10 an derselben fixiert ist. Wie nicht weiter dargestellt, ist im Zusammenbau des selbstsperrenden Gurtaufrollers die topfförmige Ausnehmung der Steuerscheibe 10 von einer dagegen liegenden, nicht dargestellten Lagerplatte des Gurtaufrollers abgedeckt, wobei in der Lagerplatte eine entsprechende Lagerung für den Wellenfortsatz 12 ausgebildet ist. Weiterhin weist die Lagerplatte einen aufstehenden und in die topfförmige Ausnehmung der Steuerscheibe 10 hineinreichenden und mit einer Innenverzahnung versehenen umlaufenden Blockierrand auf, so dass sich die an der Steuerscheibe 10 schwenkbar gelagerte Trägheitsmasse 15 in ihrer in der Zeichnung nicht weiter dargestellten ausgeschwenkten Blockierstellung mit der Innenverzahnung der Lagerplatte verhakt; somit ist die Steuerscheibe 10 bei ihrer weiteren Drehbewegung angehalten. Hierbei kommt es dann bei einer Weiterdrehung der Gurtwelle zu einer Relativdrehung von Steuerscheibe 10 und Gurtwelle und damit zu einer Verschiebung des Zapfens 14 in dem Langloch 13, was wiederum zu einer Ausschwenkung des Sperrgliedes in eine am Gurtaufroller ausgebildete Blockierverzahnung führt. Die diesbezügliche Funktion des selbstsperrenden Gurtaufrollers ergibt sich auch aus der gattungsbildenden EP 1 860 002 A1, ist aber insbesondere auch in der DE 103 24 125 B4 sowie in der DE 29 24 575 A1 oder der DE 39 26 370 A1 im Einzelnen beschrieben und zählt damit zum Stand der Technik.

An der nicht dargestellten Lagerplatte ist eine Ω-artig ausgebildete Drehfeder 25 in Form einer Drahtbiegefeder mit einem zentralen, mit Radius versehenen Lagerbereich 26 drehbar gelagert, so dass sich die Drehfeder 25 unabhängig von den Drehbewegungen der Steuerscheibe 10 um ihre Lagerung an der Lagerplatte relativ zur Steuerscheibe drehen kann. Dabei ist die Lagerung der Drehfeder 25 an der Lagerplatte reibschlüssig derart ausgeführt, dass sich einerseits die Drehfeder 25 gemeinsam mit der Steuerscheibe 10 drehen kann, andererseits aber auch eine Funktionsphase möglich ist, in welcher die Drehfeder 25 gegenüber einer Drehung der Steuerscheibe 10 stehen bleibt und somit eine Relativdrehung zur Steuerscheibe ausführt. Die Ω-artige Drehfeder 25 weist zwei in Umfangsrichtung voneinander beabstandete Federarme 27, 28 auf, deren Funktion nachstehend beschrieben ist.

Damit die Drehfeder 25 die im Funktionsgeschehen des Gurtaufrollers vorgesehenen gemeinsamen Drehbewegungen mit der Steuerscheibe 10 ausführen kann, ist an der Steuerscheibe 10 ein zwischen den beiden Federschenkeln 27 und 28 gelegener Mitnehmer 21 derart angeordnet, dass der Mitnehmer 21 Anschlagflächen 22 und 23 für die beiden Federschenkel 27 und 28 der Drehfeder 25 ausbildet, so dass in jeder Drehrichtung der Steuerscheibe 10 ein Anschlag des Mitnehmers 21 mit dem zugeordneten Federschenkel der Drehfeder 25 zusammenwirkt und so die Drehfeder 25 in der jeweiligen Drehrichtung der Steuerscheibe 10 mitnimmt. Im Einzelnen ist der Mitnehmer 21 als sich in Umfangsrichtung der Steuerscheibe 10 zwischen den Federarmen 27 und 28 der Drehfeder 25 erstreckender rechteckiger Mitnehmerblock ausgebildet, wobei eine äußere Anschlagfläche 22 an einer äußeren Längsseite des Mitnehmerblocks wirksam ist, während eine innere Anschlagfläche 23 von der Ecke einer kurzen Seite mit der zur Anschlagfläche 22 gegenüberliegenden Längsseite des rechteckigen Mitnehmerblocks gebildet ist. Weiterhin ist aus Gründen einer besseren Führung des über die Ebene der Steuerscheibe 10 hervorstehenden Zapfens 13 des Sperrgliedes das Langloch 14 von einem aufstehenden Rand 24 umgeben, der den Zapfen 13 mitführt.

Damit der Mitnehmer 21, der aufstehende Rand 24 wie auch die auf der Ebene der Steuerscheibe 10 angeordnete Trägheitsmasse 15 die vorgesehene und im einzelnen funktionell noch zu beschreibende Relativdrehung der Drehfeder 25 relativ zur Steuerscheibe 10 nicht behindern, ist die Drehfeder 25 an der Lagerplatte derart angeordnet, dass die Drehfeder 25 mit ihren beiden Federschenkeln 27, 28 einen Abstand zur Ebene der Steuerscheibe 10 einhält, wobei die freien Enden der beiden Federschenkel 27 und 28 jeweils einen in Richtung der Ebene der Steuerscheibe 10 umgebogenen Abschnitt 29 aufweisen, wobei die umgebogenen Abschnitte 29 der Federarme 27 und 28 jeweils in die Ebene von Mitnehmer 21 und Trägheitsmasse 15 eintauchen und mit den vorgenannten Bauteilen zusammenwirken.

Wie sich aus einem Vergleich der Figuren 1 und 2 ergibt, ist der in der Darstellung gemäß Figuren 1 und 2 rechte Federschenkel 27 der Drehfeder 25 zum Zusammenwirken mit dem Schwenkarm 19 der Trägheitsmasse 15 eingerichtet. Hierzu weist der Schwenkarm 19 an seiner dem Federschenkel 27 bzw. dessen umgebogenen Abschnitt 29 zugewandten Innenseite eine Anlagefläche 35 für den umgebogenen Abschnitt 29 des Federschenkels 27 auf, wobei in der in Figur 1 dargestellten und die Stellung der Drehfeder 25 bei Drehung der Steuerscheibe 10 in Gurtaufwickelrichtung (Pfeil 40) dargestellten Stellung an der Anlagefläche 35 des Schwenkarms 19 anliegt und somit ein Ausschwenken des Blockierarms 17 nach außen verhindert. Wie sich aus Figur 1 ergibt, erstreckt der Federschenkel 27 so weit in Richtung des Schwenkarms 19 der Trägheitsmasse 15, dass der umgebogene Abschnitt 29 an der Anlagefläche 35 anliegt. Damit wird die Trägheitsmasse 15 in ihrer Ruhestellung während der Drehbewegungen der Steuerscheibe 10 festgelegt, so dass die Trägheitsmasse 15 entklappert ist. Bei der entsprechenden Drehbewegung der Gurtwelle mit Steuerscheibe 10 in Aufwickelrichtung (Pfeil 40) verbleibt die Drehfeder 25 in der aus Figur 1 ersichtlichen Stellung, weil sie durch die Anlage der inneren Anschlagfläche 23 des Mitnehmers 21 gegen den umgebogenen Abschnitt 29 einschließlich eines an dessen Ende radial abstehenden Anschlagschenkels 30 des Federschenkels 28 der Drehfeder 25 mitgenommen wird. Kommt es somit am Ende der Aufwickelbewegung zu dem im Stand der Technik gemäß DE 103 24 125 B4 als technischer Hintergrund beschriebenen plötzlichen Stopp der Drehbewegung der Gurtwelle, so ist eine trägheitsbedingte Auslenkung der Trägheitsmasse 15 in deren Eingriffsstellung mit der Lagerplatte durch die Anlage des Federschenkels 27 der Drehfeder 25 gegen die Anlagefläche 35 der Trägheitsmasse 15 ausgeschlossen.

Wird nun bei vollständig auf der Gurtwelle des Gurtaufrollers aufgewickeltem Gurtband ausgehend von der in Figur 1 wiedergegebenen Anordnung von Steuerscheibe 10 und Drehfeder 25 die Gurtwelle mit Steuerscheibe 10 aufgrund eines Gurtbandauszuges in Auszugsrichtung (Pfeil 41) gedreht, wobei während der Drehung der Gurtwelle in Gurtauszugsrichtung die Funktion des gurtbandsensitiven Steuersystems sichergestellt und insoweit die Trägheitsmasse 15 frei schwenkbar sein muss, so bleibt die Drehfeder 25 aufgrund ihrer reibschlüssigen Lagerung an der Lagerplatte gegenüber der Drehung der Steuerscheibe 10 zurück, so dass sich zunächst eine Relativdrehung der Steuerscheibe 10 zur Drehfeder 25 vollzieht, bis die Anlagefläche 35 des Schwenkarms 19 der Trägheitsmasse 15 von dem Federschenkel 27 der Drehfeder 25 freigekommen ist und am Ende des Relativdrehweges der Steuerscheibe 10 zur Drehfeder 25 der umgebogene Abschnitt 29 des Federschenkels 27 in Anlage an der äußeren Anschlagfläche 22 des Mitnehmerblocks gelangt, so dass in dieser, nunmehr die Schwenkbewegung der Trägheitsmasse 15 ermöglichenden Federstellung die Drehfeder 25 bei den weiteren Drehbewegungen der Steuerscheibe 10 in Gurtauszugsrichtung (Pfeil 41) mitgenommen wird.

Kommt es am Ende der Gurtauszugsbewegung zu einer Umschaltung der Drehbewegung der Gurtwelle in Gurtaufwickelrichtung (Pfeil 40), so kommt es wiederum zu einer Relativdrehung der Steuerscheibe 10 gegenüber der aufgrund deren reibschlüssigen Lagerung wiederum stehen bleibenden Drehfeder 25, so dass sich die Anlagefläche 35 der Trägheitsmasse 15 wiederum außen über den umgebogenen Abschnitt 29 des Federschenkels 27 schiebt und in dieser Stellung die Drehfeder 25 durch den Anschlag der inneren Anschlagfläche 23 des Mitnehmers 21 an dem Federschenkel 28 der Drehfeder 25 mitgenommen wird.

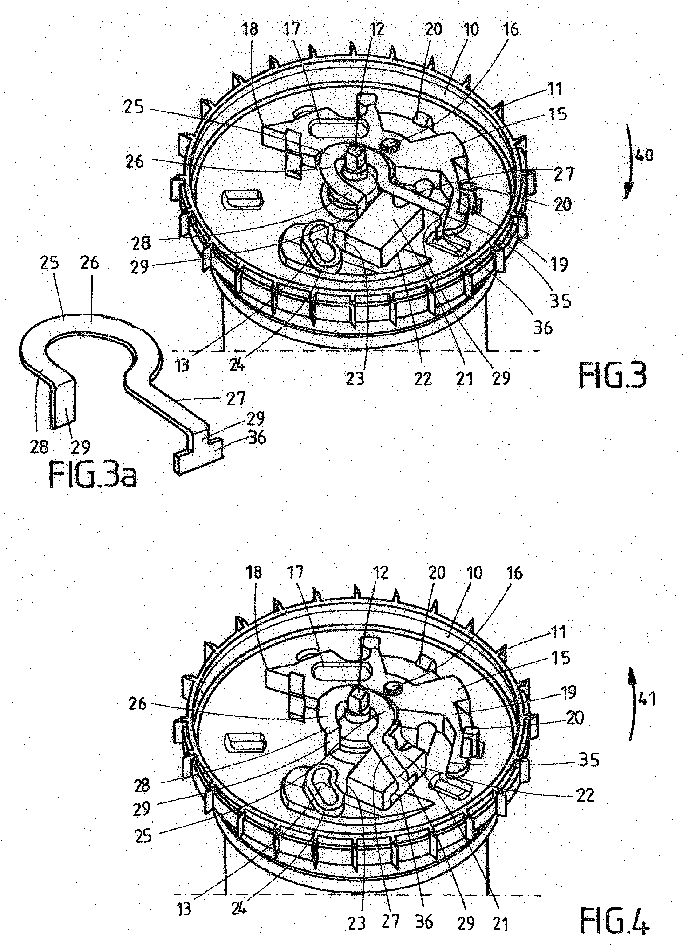

Das in den Figuren 3, 3a und 4 dargestellte Ausführungsbeispiel unterscheidet sich von dem zu Figuren 1 und 2 ausführlich beschriebenen Ausführungsbeispiel lediglich dadurch, dass die Drehfeder 25 als Stanz-Biegeteil ausgeführt ist, wodurch dieses Bauteil im Vergleich mit einem Draht-Biegeteil eine reduzierte Materialstärke bei im übrigen gleicher Festigkeit aufweist. Wie nicht weiter dargestellt, kann der Lagerbereich 26 der Drehfeder 25 mit einer Kunststoffschicht versehen sein; außerdem ist es möglich, den Lagerbereich 26 auch als geschlossenen Ring auszubilden. Soweit bei der Ausbildung der Drehfeder 25 als Stanz-Biegeteil die Federschenkel 27 und 28 eine flache Form aufweisen, ist dadurch eine bessere Anlage des Endes der Federschenkel an den zugeordneten Bauteilen gegeben. Insbesondere ist das Ende des umgebogenen Abschnitts 28 des zur Festlegung der Trägheitsmasse 15 vorgesehenen Federschenkels 27 T-förmig mit seitlich von der Achse des Federschenkels 27 abstehenden Ansätzen 36 ausgebildet, die somit in einer flächigen Anlage an der Anlagefläche 35 der Trägheitsmasse 15 bzw. der äußeren Anschlagfläche 22 des Mitnehmers 21 anliegen. Soweit der mit dem Mitnehmer 21 zusammenwirkende Federschenkel 28 an seinem umgebogenen Abschnitt 29 ebenfalls eine flache Form aufweist, ist der Federschenkel 28 nunmehr so zu dem blockartigen Mitnehmer 21 ausgerichtet, dass der umgebogene Abschnitt 29 des Federschenkels 28 nunmehr gegen die innere Längsseite des Mitnehmerblocks 21 als innere Anschlagfläche 23 anliegt.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Selbstsperrender Gurtaufroller für Sicherheitsgurte mit einer drehbar in einem Gehäuserahmen gelagerten und in Aufwickelrichtung des Gurtbandes von einer Aufwickelfeder vorgespannten Gurtwelle und mit einem gurtbandsensitiven Ansteuermechanismus, der eine an die Gurtwelle gekoppelte Steuerscheibe (10) zur Aussteuerung eines an der Gurtwelle angeordneten und bei Relativdrehung zwischen Gurtwelle und Steuerscheibe (10) bis zum Eingriff in eine Gehäuseverzahnung gegen Federwirkung auslenkbaren Sperrgliedes aufweist, wobei die Steuerscheibe (10) eine exzentrisch an der Steuerscheibe (10) schwenkbar gelagerte und gegen die Wirkung einer Rückstellfeder radial ausschwenkbare, zweiarmige Trägheitsmasse (15) trägt, die im Auslösefall aufgrund der auf die Steuerscheibe (10) ein wirkenden Drehbeschleunigung mit ihrem einen Blockierarm (17) radial bis zum Eingriff in eine ortsfeste Verzahnung ausschwenkt und dadurch die Steuerscheibe (10) in deren Drehbewegung anhält und festlegt, und wobei an einer Lagerstelle für die Gurtwelle und/oder die Steuerscheibe (10) eine zwei in Umfangsrichtung voneinander beabstandet angeordnete Federschenkel (27, 28) aufweisende Drehfeder (25) mittels einer reibschlüssigen Lagerung relativ zur Steuerscheibe (10) zwischen einer Anlagestellung an der Trägheitsmasse (15) und einer Anlagestellung an einem von der Ebene der Steuerscheibe (10) aufstehenden Mitnehmer (21) drehbar gelagert ist, **dadurch gekennzeichnet, dass** die beiden Federschenkel (27, 28) der Drehfeder (25) den Mitnehmer (21) zwischen sich einfassen und der Mitnehmer (21) Anschlagflächen (22, 23) für die Federschenkel (27, 28) zur Mitnahme der Drehfeder (25) bei der Drehung der Steuerscheibe (10) sowohl in Gurtaufwickelrichtung (Pfeil 40) als auch in Gurtauszugsrichtung (Pfeil 41) ausbildet, wobei der eine der beiden Federschenkel (27) bei Drehung der Steuerscheibe (10) in Gurtaufwickelrichtung (40) in den von einem dem Blockierarm (17) gegenüberliegenden Schwenkarm (19) der Trägheitsmasse (15) im Auslösefall durchschrittenen Schwenkweg hineinragt und in dieser Blockierstellung der Drehfeder (25) ein Ausschwenken der Trägheitsmasse (15) verhindert und bei Drehung der Steuerscheibe (10) in Gurtauszugsrichtung (41) aufgrund einer Relativdrehung der Drehfeder (25) zur Steuerscheibe (10) in eine Freigabestellung der Drehfeder (25) die Trägheitsmasse (15) freigibt.

2. Selbstsperrender Gurtaufroller nach Anspruch 1, **dadurch gekennzeichnet, dass** an dem Schwenkarm (19) der Trägheitsmasse (15) eine Anlagefläche (35) für den zur Festlegung der Trägheitsmasse (15) vorgesehenen Federschenkel (27) ausgebildet ist.

3. Selbstsperrender Gurtaufroller nach Anspruch 1 oder 2, **dadurch gekennzeichnet, dass** der zur Festlegung der Trägheitsmasse (15) vorgesehene Federschenkel (27) über einen vorgegebenen, von der Trägheitsmasse (15) aufgrund der Relativdrehung der die Trägheitsmasse (15) tragenden Steuerscheibe (10) gegenüber der feststehenden Drehfeder (25) durchschrittenen Drehwinkel in den Schwenkweg hineinragt und die an der Trägheitsmasse (15) ausgebildete Anlagefläche (35) eine in Umfangsrichtung dem für das Festlegen der Trägheitsmasse (15) eingerichteten Drehwinkel der Steuerscheibe (10) entsprechende Erstreckung aufweist.

4. Selbstsperrender Gurtaufroller nach einem der Ansprüche 1 bis 3, **dadurch gekennzeichnet, dass** die Drehfeder (25) mit beiden Federschenkeln (27, 28) in einer oberhalb der Trägheitsmasse (15) und mit Abstand zur Ebene der Steuerscheibe (10) gelegenen Ebene angeordnet ist und die freien Enden der beiden Federschenkel (27, 28) jeweils einen in Richtung der Ebene der Steuerscheibe (10) umgebogenen Abschnitt (29) aufweisen und die umgebogenen Abschnitte (29) den Mitnehmer (21) übergreifen und mit dessen Anschlagflächen (22, 23) zusammenwirken.

5. Selbstsperrender Gurtaufroller nach Anspruch 4, **dadurch gekennzeichnet, dass** der umgebogene Abschnitt (29) des zur Festlegung der Trägheitsmasse (15) vorgesehenen Federschenkels (27) bei in der Ruhelage befindlicher Trägheitsmasse (15) einen Abstand zu der Anlagefläche (35) der Trägheitsmasse (15) einhält.

6. Selbstsperrender Gurtaufroller nach einem der Ansprüche 1 bis 5, **dadurch gekennzeichnet, dass** der umgebogene Abschnitt (29) des zur Festlegung der Trägheitsmasse (15) vorgesehenen Federschenkels (27) bei in der Ruhelage befindlicher Trägheitsmasse (15) an der Anlagefläche (35) der Trägheitsmasse (15) anliegt.

7. Selbstsperrender Gurtaufroller nach einem der Ansprüche 1 bis 6, **dadurch gekennzeichnet, dass** die Drehfeder (25) als Drahtbiegeteil ausgebildet ist.

8. Selbstsperrender Gurtaufroller nach einem der Ansprüche 1 bis 6, **dadurch gekennzeichnet, dass** die Drehfeder (25) als Stanz-Biegeteil ausgebildet ist.

9. Selbstsperrender Gurtaufroller nach Anspruch 8, **dadurch gekennzeichnet, dass** das Ende des umgebogenen Abschnitts (29) des zur Festlegung der Trägheitsmasse (15) vorgesehenen Federschenkels (27) T-förmig mit seitlich von der Achse des Federschenkels (27) abstehenden Ansätzen (36) ausgebildet ist.

10. Selbstsperrender Gurtaufroller nach Anspruch 8 oder 9, **dadurch gekennzeichnet, dass** der Lagerbereich (26) der als Stanz-Biegeteil ausgebildeten Drehfeder (25) mit einer Kunststoffschicht versehen ist.

## Claims

1. A self-locking belt retractor for seatbelts including a belt shaft, which belt shaft is rotatably supported in a housing frame and pre-tensioned by a winding spring in the direction of retraction of the belt strap, and a belt strap-sensitive drive mechanism that includes a control disc (10), which control disc (10) is coupled to the belt shaft, for controlling a blocking element disposed on the belt shaft, which blocking element is deflectable against a spring effect upon relative rotation between belt shaft and control disc (10) until the engaging in a housing gearing, wherein the control disc (10) supports a two-armed inertial mass (15) eccentrically pivotable on the control disc (10) and radially pivotable against the effect of a return spring, which inertial mass (15) upon activation radially pivots, due to the rotational acceleration acting on the control disc (10), with its one blocking arm (17) until engagement in a positionally fixed gearing, and thereby retaining and setting the control disc (10) in its rotational movement, and wherein a torsion spring (25), which is located at a bearing position for the belt shaft and/or the control disc (10) and includes two spring legs (27, 28) disposed circumferentially distanced from each other, is rotatably supported using a frictionally bonded bearing relative to the control disc (10) between a contact position on the inertial mass (15) and a contact position on a carrier (21) projecting from the plane of the control disc (10), **characterised in that** both of the spring legs (27, 28) of the torsion spring (25) enclose between themselves the carrier (21) and the carrier (21) forms abutment surfaces (22, 23) for the spring legs (27, 28) for carrying the torsion spring (25) upon the rotation of the control disc (10) both in the direction of retraction of the belt (arrow 40) and in the direction of extension of the belt (arrow 41), wherein one of both spring legs (27) projects into the pivot path traversed, in the event of activation, by a pivot arm (19) of the inertial mass (15), which pivot arm is opposite the blocking arm (17), upon rotation of the control disc (10) in the direction of belt winding (40) and in this blocking position of the torsion spring (25) prevents a pivoting of the inertial mass (15) and moreover upon rotation of the control disc (10) in the direction of belt extension (41) releases the inertial mass (15) owing to a relative rotation of the torsion spring (25) toward the control disc (10) in a release-position of the torsion spring (25).

2. The self-locking belt retractor according to claim 1, **characterised in that** an abutment surface (35) is formed on the pivot arm (19) of the inertial mass (15), which abutment surface (35) is for the spring leg (27) provided for the setting of the inertial mass (15).

3. The self-locking belt retractor according to claim 1 or 2, **characterised in that** the spring leg (27) provided for the setting of the inertial mass (15) projects into the pivot path over a predetermined angle of rotation traversed by the inertial mass (15) because of the relative rotation of the control disc (10), which control disc (10) supports the inertial mass (15), with respect to the angle of rotation traversed by the fixed torsion spring (25), and the abutment surface (35) formed on the inertial mass (15) includes an extension in the circumferential direction corresponding to the angle of rotation of the control disc (10), which angle is configured for the setting of the inertial mass (15).

4. The self-locking belt retractor according to one of claims 1 to 3, **characterised in that** the torsion spring (25) is disposed with both spring legs (27, 28) in a plane, which plane is above the inertial mass (15) and distanced from the plane of the control disc (10), and the free ends of both respective spring legs (27, 28) include a section (29) curved toward the plane of the control disc (10), and the curved sections (29) overlap the carrier (21) and co-operate with the abutment surfaces (22, 23) thereof.

5. The self-locking belt retractor according to claim 4, **characterised in that** the curved section (29) of the spring leg (27) provided to set the inertial mass (15) maintains a distance from the abutment surface (35) of the inertial mass (15) when the inertial mass (15) is in a resting position.

6. The self-locking belt retractor according to one of claims 1 to 5, **characterised in that** the curved section (29) of the spring leg (27) provided to set the inertial mass (15) abuts on the abutment surface (35) of the inertial mass (15) when the inertial mass (15) is in a resting position.

7. The self-locking belt retractor according to one of claims 1 to 6, **characterised in that** the torsion spring (25) is formed as a bent wire part.

8. The self-locking belt retractor according to one of claims 1 to 6, **characterised in that** the torsion spring (25) is formed as a stamped bent part.

9. The self-locking belt retractor according to claim 8, **characterised in that** the end of the curved section (29) of the spring leg (27) provided to set the inertial mass (15) is formed T-shaped with projections (36) projecting laterally from the axis of the spring leg (27).

10. The self-locking belt retractor according to claim 8 or 9, **characterised in that** the bearing area (26) of the torsional spring (25) formed as a stamped bent part is provided with a plastic coating.

## Revendications

1. Enrouleur autobloquant pour ceintures de sécurité comprenant un arbre de ceinture monté rotatif dans un cadre de boîtier et précontraint dans le sens d'enroulement de la sangle par un ressort d'enroulement et comprenant un mécanisme de commande sensible à la sangle, qui présente un disque de commande (10) couplé à l'arbre de ceinture destiné au réglage d'un organe de blocage disposé sur l'arbre de ceinture et pouvant être dévié contre l'action d'un ressort jusqu'à la prise dans une denture de boîtier lors d'une rotation relative entre l'arbre de ceinture et le disque de commande (10), le disque de commande (10) portant une masse d'inertie (15) à deux bras montée pivotante de manière excentrique sur le disque de commande (10) et pouvant être basculée radialement contre l'action d'un ressort de rappel, laquelle, en cas de déclenchement, bascule en raison de l'accélération de rotation agissant sur le disque de commande (10) radialement avec son bras de blocage (17) jusqu'à la prise dans une denture fixe et arrête et bloque ainsi le mouvement de rotation du disque de commande (10), et un ressort de torsion (25) présentant deux branches de ressort (27, 28) disposées espacées l'une de l'autre dans le sens circonférentiel étant monté sur un point d'appui pour l'arbre de ceinture et/ou le disque de commande (10), rotatif par rapport au disque de commande (10) entre une position d'appui contre la masse d'inertie (15) et une position d'appui contre un élément d'entraînement (21) sortant du plan du disque de commande (10) au moyen d'un logement par friction, **caractérisé en ce que** les deux branches de ressort (27, 28) du ressort de torsion (25) encadrent entre elles l'élément d'entraînement (21) et l'élément d'entraînement (21) forme des surfaces de butée (22, 23) pour les branches de ressort (27, 28) afin d'entraîner le ressort de torsion (25) lors de la rotation du disque de commande (10) aussi bien dans le sens d'enroulement de la ceinture (flèche 40) que dans le sens de déroulement de la ceinture (flèche 41), l'une des deux branches de ressort (27) dépassant lors d'une rotation du disque de commande (10) dans le sens d'enroulement de la ceinture (40) dans le trajet de pivotement parcouru par un bras de pivotement (19) de la masse d'inertie (15) opposé au bras de blocage (17) en cas de déclenchement, et empêchant dans cette position de blocage du ressort de torsion (25) un basculement de la masse d'inertie (15) et libérant lors d'une rotation du disque de commande (10) dans le sens de déroulement de la ceinture (41) la masse d'inertie (15) en raison d'une rotation relative du ressort de torsion (25) par rapport au disque de commande (10) dans une position de libération du ressort de torsion (25).

2. Enrouleur autobloquant selon la revendication 1, **caractérisé en ce q**u'une surface d'appui (35) est formée sur le bras de pivotement (19) de la masse d'inertie (15) pour la branche de ressort (27) prévue pour le blocage de la masse d'inertie (15).

3. Enrouleur autobloquant selon la revendication 1 ou 2, **caractérisé en ce que** la branche de ressort (27) prévue pour le blocage de la masse d'inertie (15) dépasse dans le trajet de pivotement sur un angle de rotation prédéterminé parcouru par la masse d'inertie (15) en raison de la rotation relative du disque de commande (10) portant la masse d'inertie (15) par rapport au ressort de torsion (25) fixe et la surface d'appui (35) formée sur la masse d'inertie (15) présente une étendue dans le sens circonférentiel correspondant à l'angle de rotation du disque de commande (10) configuré pour le blocage de la masse d'inertie (15).

4. Enrouleur autobloquant selon l'une des revendications 1 à 3, **caractérisé en ce que** le ressort de torsion (25) est disposé avec les deux branches de ressort (27, 28) dans un plan situé au-dessus de la masse d'inertie (15) et à distance du plan du disque de commande (10) et les extrémités libres des deux branches de ressort (27, 28) présentent chacune une section recourbée (29) en direction du plan du disque de commande (10) et les sections recourbées (29) chevauchent l'élément d'entraînement (21) et coopèrent avec ses surfaces de butée (22, 23).

5. Enrouleur autobloquant selon la revendication 4, **caractérisé en ce que** la section recourbée (29) de la branche de ressort (27) prévue pour le blocage de la masse d'inertie (15) respecte une distance par rapport à la surface d'appui (35) de la masse d'inertie (15) lorsque la masse d'inertie (15) se trouve dans la position de repos.

6. Enrouleur autobloquant selon l'une des revendications 1 à 5, **caractérisé en ce que** la section recourbée (29) de la branche de ressort (27) prévue pour le blocage de la masse d'inertie (15) appuie contre la surface d'appui (35) de la masse d'inertie (15) lorsque la masse d'inertie (15) se trouve dans la position de repos.

7. Enrouleur autobloquant selon l'une des revendications 1 à 6, **caractérisé en ce que** le ressort de torsion (25) est formé en tant que pièce de fil plié.

8. Enrouleur autobloquant selon l'une des revendications 1 à 6, **caractérisé en ce que** le ressort de torsion (25) est formé en tant que pièce estampée pliée.

9. Enrouleur autobloquant selon la revendication 8, **caractérisé en ce que** l'extrémité de la section recourbée (29) de la branche de ressort (27) prévue pour le blocage de la masse d'inertie (15) est formée en forme de T avec des saillies (36) dépassant latéralement de l'axe de la branche de ressort (27).

10. Enrouleur autobloquant selon la revendication 8 ou 9, **caractérisé en ce que** la zone d'appui (26) du ressort de torsion (25) formé en tant que pièce estampée pliée est dotée d'une couche de matière plastique.
